# DEMANDE DE BREVET EUROPEEN

(11) **EP 1 475 918 A2**
(43) Date de publication de la demande: **10.11.2004**
(21) Numéro de dépôt: 03028025.9
(22) Date de dépôt: 06.12.2003
(51) Int. Cl.: H04L 9/06

(54) **Procédé de chiffrement par permutations de suites de longueur fixée**

(30) Priorité: 17.12.2002 FR 0215985
(71) Demandeur: FRANCE TELECOM, 75015 Paris (FR)
(72) Inventeur: Gilbert, Henri, 91140 Bures-Sur-Yvette (FR); Macario-Rat, Gilles, 92170 Vanves (FR); Mouton, Dimitri, 75015 Paris (FR)
(74) Mandataire: Bonnier, Patrick

(57) **Abrégé**

Procédé de chiffrement d'une information constituée par une suite finie {S1,S2,...,SN} de N symboles (S1,S2,...,SN) choisis dans un alphabet A.

Selon l'invention,, ayant défini, d'une part, une convention secrète (K) de p symboles K1,...,Kp choisis dans un deuxième alphabet B et, d'autre part, une fonction multivariée M à m+1 variables (m<=N) : M(Xi1,...,Xim,Y) opérant de A^{m}xB dans A, {i1,...,im} étant m indices distincts de l'intervalle [1,N] et la fonction M étant bijective par rapport à au moins une (S1) des m variables de A, ledit procédé de chiffrement consiste à effectuer une succession de X permutations sur les suites {S1,S2,...,SN} de sorte que, {S1,S2,...,SN} étant la suite avant la jème permutation, la suite après la jème permutation est {S2,S3,..., SN,Zj}, Zj étant égal à M(Si1,...,Sim,Kj), l'information chiffrée étant constituée par la suite {S'₁,S'₂,...,S'_{N}} obtenue à l'issue de la Xème permutation.

Application au chiffrement par cryptographie à clé secrète symétrique

## Description

La présente invention concerne un procédé de chiffrement d'une information constituée par une suite finie de N symboles choisis dans un alphabet.

La présente invention se situe dans le domaine technique général du traitement de l'information, et, plus particulièrement, dans celui du chiffrement de l'information par cryptographie à clé secrète symétrique, par opposition à la cryptographie publique à clé asymétrique.

Il arrive fréquemment que l'on ait besoin de chiffrer une information alors que celle-ci est constituée d'une suite finie de symboles appartenant à un alphabet fini, et que l'on souhaite que l'information chiffrée soit elle-même représentée dans ce même alphabet et soit de même longueur que la suite claire initiale. Ce besoin se fait sentir, par exemple, à propos d'un numéro de téléphone, d'un numéro de carte prépayée virtuelle, d'un numéro de carte bancaire, ou encore d'un numéro de licence alphanumérique. Dans les trois premiers cas cités, l'alphabet est constitué de chiffres de 0 à 9, tandis que dans le dernier cas il est constitué de lettres majuscules et minuscules et de chiffres.

C'est un objet de la présente invention que de proposer un procédé de chiffrement basé sur la construction de fonctions de chiffrement que l'on peut désigner par « permutations sur l'ensemble des suites de longueur fixée sur un ensemble fini de symboles », et qui répondrait au besoin exprimer plus haut, quel que soit l'ensemble fini de symboles et quelle que soit la longueur fixée des suites.

La cryptographie à clé secrète consiste en la conception et l'étude des fonctions à convention secrète qui permettent à deux parties partageant la connaissance de cette convention secrète d'effectuer les deux opérations appelées « chiffrement » et « déchiffrement » consistant :
- pour le chiffrement, à transformer des données D en des données C,
- pour le déchiffrement, à transformer les données C ci-dessus en les données D,
avec les propriétés suivantes :
- les données C ne peuvent être transformées en les données D que par le truchement de la connaissance de la convention secrète,
- la connaissance de C et D, ou d'un grand nombre de couples {C, D}, ne permet pas de retrouver la convention secrète.

Il existe de nombreux algorithmes de chiffrement à clé secrète connus dont beaucoup sont standardisés, tels que DES, 3DES, AES, IDEA, BLOWFISH, RC2, RC4, etc.

La majorité de ces algorithmes sont utilisés pour chiffrer des suites binaires, indépendamment de la sémantique de ces bits, et nécessitent donc la transformation des informations à chiffrer en un codage binaire. L'information chiffrée résultante est également représentée par une suite binaire.

Il existe plusieurs modes de chiffrement, qui contraignent dans la plupart des cas à chiffrer des blocs binaires de taille fixe. Les différences entre les modes jouent sur les propriétés de synchronisation entre un bloc en clair et un bloc chiffré, par exemple : réinjection d'un bloc chiffré pour le chiffrement du bloc suivant, dictionnaire de blocs chiffrés indépendamment, etc.

Cependant, ces techniques de chiffrement connus présentent un certain nombre d'inconvénients :
a) Dans le cas où l'on veut chiffrer des données indépendantes, de petite taille, les outils existants mènent à une expansion de l'information, soit pour respecter le format de représentation de l'information chiffrée, soit pour disposer de clés de diversification (vecteurs d'initialisation) propres à la garantie de sécurité du chiffrement. C'est ainsi, par exemple, que le chiffrement d'un texte constitué de caractères imprimables donne une suite binaire (caractères ASCII notamment) et nécessite une expansion pour pouvoir représenter le texte chiffré sous forme de caractères imprimables.
b) La contrainte de respect du format de l'information à chiffrer comme du format de l'information chiffrée entraîne, dans les outils existants, la perte du format des données claires lors du chiffrement. C'est le cas en particulier du chiffrement d'identifiants numériques, qui généralement sont représentables par un numéro de série plus petit qu'une valeur maximale, et qui mène à un résultat chiffré n'ayant plus cette propriété.

Aussi, le problème technique à résoudre par l'objet de la présente invention est de proposer un procédé de chiffrement d'une information constituée par une suite finie {S₁,S₂,...,S_{N}} de N symboles choisis dans un alphabet A, qui permettrait de chiffrer une suite de longueur fixée tout en évitant les inconvénients de l'art antérieur mentionnés plus haut.

La solution au problème technique posé consiste, selon la présente invention, en ce que, ayant défini, d'une part, une convention secrète de p symboles de clé K₁,...,Kₚ choisis dans un deuxième alphabet B et, d'autre part, une fonction multivariée M à m+1 variables (m<=N) : M(Xᵢ₁,...,Xᵢₘ,Y) opérant de A^{m}xB dans A, {i₁,...,iₘ} étant m indices distincts de l'intervalle [1,N] et la fonction M étant bijective par rapport à au moins une des m variables de A, ledit procédé de chiffrement consiste à effectuer une succession de X permutations sur les suites {S₁,S₂,...,S_{N}} de sorte que, {S₁,S₂,...,S_{N}} étant la suite avant la j^{ème} permutation, la suite après la j^{ème} permutation est {S₂,S₃,..., S_{N},Zj}, Zj étant égal à M(Sᵢ₁,...,Sᵢₘ,Kⱼ), l'information chiffrée étant constituée par la suite {S'₁,S'₂,...,S'_{N}} obtenue à l'issue de la X^{ème} permutation.

Dans la suite de ce mémoire on appellera « symbole » une unité élémentaire d'information qui sert à représenter des mots, des nombres, des noms, etc. Des exemples de symboles sont le bit, l'octet, les caractères imprimables, les chiffres, etc.

De même, on désignera par « alphabet » un ensemble de symboles ayant une propriété commune, par exemple sur le format, la taille, etc., qui servent ensemble à représenter une certaine catégorie d'information. On peut citer comme alphabet les caractères sur 7 bits définis par le code ASCII, les chiffres de 0 à 9, les caractères affichables.

Par fonction « multivariée », on entendra une fonction qui prend plusieurs arguments en entrée, ces arguments pouvant être de même nature ou de nature différente. L'addition est un exemple de fonction multivariée. Dans le cadre de l'invention, la fonction multivariée M prend en entrée m symboles Sᵢ₁,...,Sᵢₘ et une valeur Kⱼ de symbole de clé de la convention secrète K, et donnant en sortie un symbole Zj appartenant au même alphabet A que les symboles Sᵢ : Zj=M(Sᵢ₁,...,Sᵢₘ,Kⱼ)

La fonction multivariée M est dite bijective par rapport à l'une de ses variables si, toutes les autres variables étant fixées, la fonction restreinte à cette coordonnée est bijective. Dans la suite de la description, on considèrera le cas où la fonction M(Xᵢ₁,...,Xᵢₘ,Y) est bijective par rapport à la première variable (Xᵢ₁).

Selon un mode de mise en oeuvre particulier du procédé conforme à l'invention dans lequel le nombre m est égal à 3, la fonction M définie par Z=M(X₁,X₂,X_{N},Y) se calcule selon les étapes suivantes:
- U=t1(X₁,X_{N})
- V=t2(U,Y)
- Z=t1(V,X₂)
t1 et t2 étant les fonctions associées à deux carrés latins T1 et T2 de taille égale au cardinal de l'ensemble A.

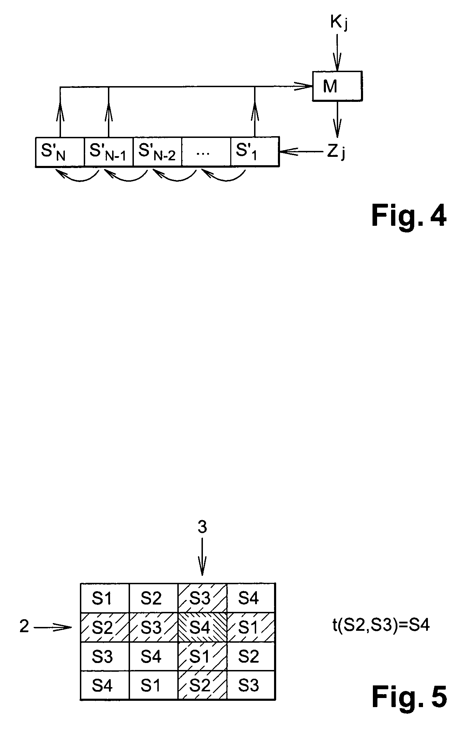

On appelle "carré latin" de taille N un tableau T de NxN cases contenant N symboles distincts (S1,...,SN) d'un alphabet A et tel que chaque ligne et chaque colonne du tableau contienne une et une seule fois chaque symbole. Un exemple de carré latin de taille 4 est donné sur la figure 5.

Par extension, et en supposant que les symboles de l'alphabet A soient ordonnés, c'est à dire numérotés de 1 à N, on définit une fonction "carré latin" t, associée au carré latin T, de la manière suivante: t(Si,Sj) est le symbole contenu dans la case située à l'intersection de la i^{ème} ligne et de la j^{ème} colonne.

La fonction multivariée t ainsi définie est bijective par rapport à chacune de ses variables.

On peut définir l'"inverse à gauche" T^{*g} et l'"inverse à droite" T^{*d} d'un carré latin et les fonctions t^{*g} et t^{*d} associées correspondantes par les propriétés :
- quels que soient Y et X, t(t^{*g}(X,Y),Y)=X
- quels que soient Y et X, t(X, t^{*d}(X,Y))=Y

La description qui va suivre en regard des dessins annexés, donnés à titre d'exemples non limitatifs, fera bien comprendre en quoi consiste l'invention et comment elle peut être réalisée.

La figure 1 est un schéma montrant le mécanisme d'un registre à décalage.

La figure 2 est un schéma montrant le mécanisme d'un premier mode de réalisation du procédé conforme à l'invention.

La figure 3 est un schéma montrant le mécanisme d'un deuxième mode de réalisation du procédé conforme à l'invention.

La figure 4 est un schéma montrant le mécanisme de déchiffrement associé au mécanisme de chiffrement de la figure 3.

La figure 5 représente un exemple de carré latin de taille 4.

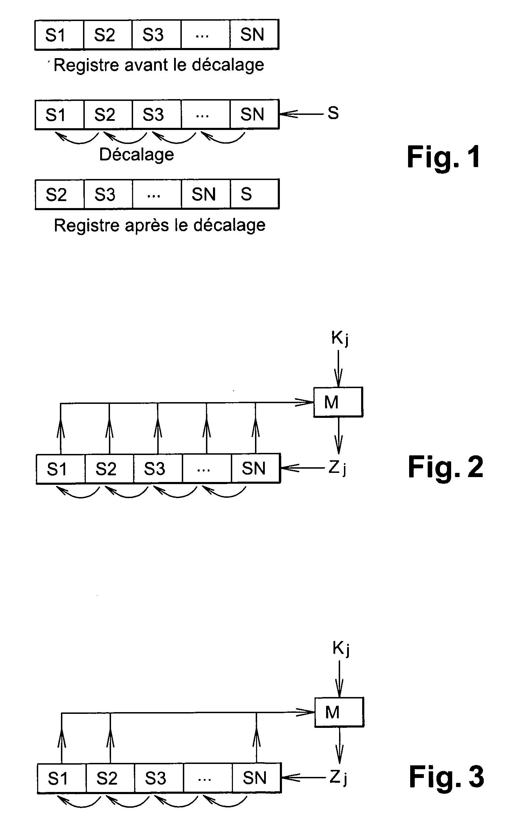

Sur la figure 1 est représenté un registre à décalage de longueur N composé d'un ensemble ordonné de N cases contenant N symboles, distincts ou non, d'un alphabet A, à savoir S₁,S₂,...,S_{N}.

Le registre de la figure 1 possède un mécanisme dit de décalage qui, à partir d'un nouveau symbole, mémorise celui-ci dans la dernière case et mémorise dans chaque case j-1 le symbole préalablement présent dans la case j. Par conséquent, le symbole S₁ préalablement présent dans la première case est oublié.

Dans le cadre de l'invention, les N symboles constituant l'information à chiffrer sont disposés initialement dans les N cases du registre à décalage de la figure 1.

Selon le procédé, objet de l'invention, on définit, d'une part, une convention secrète K consistant en une suite de p symboles de clé K₁, ...,Kₚ choisis dans un deuxième alphabet B avec, de préférence, p suffisamment grand, et, d'autre part, une fonction multivariée M à m+1 variables (m<=N) : M(Xᵢ₁,...,Xᵢₘ,Y) opérant de A^{m}xB dans A, {i₁,...,iₘ} étant m indices distincts de l'intervalle [1,N].

Par ailleurs, la fonction M est prise bijective par rapport à sa première variable Xᵢ₁.

Dans un mode général de mise en oeuvre du procédé de chiffrement, objet de l'invention, représenté sur la figure 2, le nombre m est égal à N: ({i₁,...,iₘ}={1,...,N}).

Soit alors Zj=M(S₁,...,S_{N},Kⱼ) le résultat du J^{ème} tour du registre à décalage. Si {S₁,S₂, ...,S_{N}} est l'état du registre à décalage avant le J^{ème} tour, l'état du registre à décalage après le J^{ème} tour et avant le J+1^{ème} tour devient : {S₂,S₃,...,S_{N},Zⱼ}.

Le procédé de chiffrement consiste à effectuer X tours du registre à décalage, avec X de préférence supérieur à plusieurs fois N. L'état du registre à décalage avant le 1^{er} tour constitue l'information en clair. L'état du registre à décalage à l'issue du X^{ème} tour constitue l'information chiffrée.

Dans une variante du procédé de l'invention, le nombre m est pris strictement inférieur à N, par exemple 3, et la fonction M est définie par M(X₁,X₂,X_{N},Y), comme indiqué sur la figure 3: {i₁,i₂,i₃}={1,2,N}. Le résultat Zj du J^{ème} tour du registre à décalage est donné par Zj= M(S₁,S₂,S_{N},Kⱼ).

Une mise en oeuvre particulière de cette variante de réalisation consiste par exemple à choisir pour alphabet A l'ensemble des chiffres de 0 à 9.

La longueur N des suites {S₁,S₂, ...,S_{N}} peut prendre des valeurs différentes de 6 à 16 environ, par exemple N=14. Toute autre valeur serait évidemment recevable.

Le registre à décalage est donc de taille N=14.

La convention secrète K est constituée d'une suite de p=12 chiffres, par exemple: K1,...,K12. Si le nombre X de tours de registre à décalage est supérieur à p, on prendra K13=K1, K14=K2, etc.

On appellera T1 et T2 deux carrés latins de taille N=10 sur l'alphabet A, et t1 et t2 les fonctions associées.

La fonction M prend en argument trois cases du registre à décalage : la première X1, la deuxième X2 et la dernière X14. Zj=M(S₁,S₂,S_{N},Kⱼ) est calculé avec un symbole de clé Kⱼ choisi dans la convention secrète K.

M(X1,X2,X14,Y)=Z se calcule par étapes :
■ U=t1(X1,X14)
■ V=t2(U,Y)
■ Z=t1 (V,X2)

Après X=100 tours du registre à décalage, par exemple, on obtient l'information initiale chiffrée que l'on notera sous forme de la suite {S'₁,S'₂, ...,S'_{N}}.

Conformément à la figure 4, la fonction de déchiffrement de l'information chiffrée {S'₁,S'₂, ...,S'_{N}} est construite de la manière suivante :
○ En entrée, le registre à décalage est chargé avec les données chiffrées inversées symbole par symbole (S'_{N},S'_{N-1}, ..., S'₁).
○ La fonction inverse « M⁻¹ » de M par rapport à la première coordonnée prend en argument trois cases du registre à décalage: la première X1, la deuxième X2 et la dernière X14. Zj=M(S₁,S₂,S_{N},Kⱼ) est calculé avec un symbole de clé Kj, en commençant par le dernier utilisé lors du chiffrement et ensuite en décroissant : au tour suivant est utilisé Kj-1.
○ M(X1,X2, X14,Y)=Z se calcule par étapes :
   ■ V=t1^{*g}(X1,X14)
   ■ U=t2^{*g} (V,Y)
   ■ Z=t1^{*g} (U,X2)
○ Le registre se décale alors de la même manière que pour la fonction de chiffrement, la 14^{ème} case prenant la valeur Zj.
○ On effectue ainsi 100 tours du registre à décalage.
○ A l'issue de ces 100 tours, le registre contient l'information en clair {S₁,S₂, ...,S_{N}}.

On comprend que l'avantage de ce procédé est que la fonction de chiffrement et la fonction de déchiffrement ont le même schéma.

## Revendications

1. Procédé de chiffrement d'une information constituée par une suite finie {S₁,S₂,...,S_{N}} de N symboles (S₁,S₂,...,S_{N}) choisis dans un alphabet A, **caractérisé en ce que**, ayant défini, d'une part, une convention secrète (K) de p symboles de clé K₁,...,Kₚ choisis dans un deuxième alphabet B et, d'autre part, une fonction multivariée M à m+1 variables (m<=N) : M(Xᵢ₁,...,Xᵢₘ,Y) opérant de A^{m}xB dans A, {i₁,...,iₘ} étant m indices distincts de l'intervalle [1,N] et la fonction M étant bijective par rapport à au moins une (Xᵢ₁) des m variables de A, ledit procédé de chiffrement consiste à disposer initialement les N symboles (S₁,S₂,...,S_{N}) constituant l'information à chiffrer dans les N cases d'un registre à décalage , puis à effectuer une succession de X tours du registre à décalage réalisant une succession de X permutations sur les suites {S₁,S₂,...,S_{N}} de sorte que, {S₁,S₂,...,S_{N}} étant la suite avant la j^{ème} permutation, la suite après la j^{ème} permutation est {S₂,S₃,..., S_{N},Zj}, Zj étant égal à M(Sᵢ₁,...,Sᵢₘ,Kⱼ), l'information chiffrée étant constituée par la suite {S'₁,S'₂,...,S'_{N}} contenue dans le registre à décalage à l'issue de la X^{ème} permutation résultant du X^{ème} tour du registre à décalage.

2. Procédé de chiffrement selon la revendication 1, **caractérisé en ce que** la fonction M(Xᵢ₁,...,Xᵢₘ,Y) est bijective par rapport à la première variable (Xᵢ₁).

3. Procédé de chiffrement selon l'une des revendications 1 ou 2, **caractérisé en ce que** le nombre m est égal à N.

4. Procédé de chiffrement selon l'une des revendications 1 ou 2, **caractérisé en ce que** le nombre m est strictement inférieur à N.

5. Procédé de chiffrement selon l'une quelconque des revendications 1 à 4, **caractérisé en ce que** le nombre X de permutations est supérieur à plusieurs fois la longueur N des suites {S₁,S₂,...,S_{N}}.

6. Procédé de chiffrement selon la revendication 5, **caractérisé en ce que** le nombre m est égal à 3, la fonction M étant définie par M(X₁,X₂,X_{N},Y).

7. Procédé de chiffrement selon la revendication 6, **caractérisé en ce que** la fonction M(X₁,X₂,X_{N},Y)=Z se calcule selon les étapes suivantes:
- U=t1(X₁,X_{N})
- V=t2(U,Y)
- Z=t1(V,X₂)
t1 et t2 étant les fonctions associées à deux carrés latins T1 et T2 de taille égale au nombre N.

8. Procédé de déchiffrement d'une information chiffrée au moyen du procédé de chiffrement selon la revendication 7, **caractérisé en ce que** les symboles (S'₁,S'₂,...,S'_{N}) de la suite {S'₁,S'₂,...,S'_{N}} constituant l'information chiffrée étant inversés symbole par symbole (S'_{N},S'_{N-1}, ..., S'₁), M(S₁,S₂,S_{N},Kⱼ)=Zj est calculé en utilisant un symbole de clé Kj en commençant par le dernier utilisé lors du chiffrement et en ensuite en ordre décroissant ...Zj,Zj-1,..., M(X₁,X₂,X_{N},Y)=Z se calculant selon les étapes suivantes:
- V=t1^{*g}(X₁,X_{N})
- U=t2^{*g} (V,Y)
- Z=t1^{*g} (U,X₂),
la suite obtenue à l'issue de la X^{ème} permutation reconstituant l'information en clair {S₁,S₂, ...,S_{N}}.
